# EUROPÄISCHE PATENTSCHRIFT

(11) **EP 4 291 514 B1**
(45) Veröffentlichungstag und Bekanntmachung des Hinweises auf die Patenterteilung: **11.11.2026**
(21) Anmeldenummer: 22708791.3
(22) Anmeldetag: 04.02.2022
(51) Int. Cl.: B65G 13/07, B65G 39/02

(54) **VERFAHREN ZUR HERSTELLUNG EINER FÖRDERROLLE**
METHOD FOR MANUFACTURING A TRANSPORT ROLLER
PROCÉDÉ DE FABRICATION D'UN ROULEAU DE TRANSPORT

(30) Priorität: 12.02.2021 DE 102021103408
(43) Veröffentlichungstag der Anmeldung: 20.12.2023
(73) Patentinhaber: Interroll Holding AG, 6592 Sant'Antonino (CH)
(72) Erfinder: LINDHOLM, Armin, 41836 Hückelhoven (DE); LEMKE, Jörg, 41836 Hückelhoven (DE); LANGENSIEPEN, Dominik, 41836 Hückelhoven (DE)
(74) Vertreter: Kohlhof, Stephan
(86) Internationale Anmeldenummer: PCT/EP2022/052756
(87) Internationale Veröffentlichungsnummer: WO 2022/171541

(56) Entgegenhaltungen:
- EP-A2- 0 104 953
- CN-U- 208 731 948
- DE-B3- 102004 002 529
- DE-U1- 202017 006 722
- FR-A- 1 380 687
- JP-A- 2003 336 625
- JP-A- S51 147 884

## Beschreibung

Die Erfindung betrifft ein Verfahren zur Herstellung einer Förderrolle.

Förderrollen sind insbesondere anwendbar in einer Fördereinrichtung für Paletten und Container. Fördergüter in solchen Anlagen weisen insbesondere ein Gewicht von zumindest 100kg oder zumindest 500kg auf. Die Förderrollen müssen dazu ausgelegt sein, dass zumindest zeitweise in einzelnen Betriebszuständen nahezu das gesamte Gewicht des Förderguts auf einer einzelnen Rolle aufliegt.

Aufgrund der Drehbewegung ist die Förderrolle dauernder Wechselbelastung bei hohen Biegemomenten ausgesetzt. Um dieser Belastung standhalten zu können werden die tragenden Bauteile vorzugsweise miteinander verschweißt.

Eine solche Förderrolle ist in der DE 20 2009 005 878 U1 beschrieben. Hierin ist ein zylindrisches Rundrohr mit einem Lagerabschnitt verschweißt.

Solche Förderrollen umfassen tragende Bauteile, die insbesondere aus Stahl gebildet sind. Die Förderrollen werden dabei einzeln auf Basis individueller Bestellungen gefertigt. Kurze Lieferzeiten sind daher anzustreben. Dabei werden zunächst diejenigen Bauteile der Förderrolle ausgewählt, die zur jeweiligen Bestellung passen, und entsprechend vorbearbeitet. Anschließend erfolgt das Verschweißen. Erst nach dem Verschweißen wird der Korrosionsschutz aufgebracht, um auch die Schweißnaht in den Korrosionsschutz einzubeziehen. Der Korrosionsschutz wird in der Regel von spezialisierten Betrieben durchgeführt, insbesondere durch Verzinken. Dazu sind die Förderrollen zu verpacken und zu versenden. Nach der Korrosionsschutzbehandlung werden die Förderrollen vom spezialisierten Betrieb wieder zurückgesendet und die weitere Bearbeitung (Einsetzen von Lagern und Befestigungsmitteln) kann erfolgen. Da die Förderrollen auftragsbezogen gefertigt werden geht mit der zwischengeschalteten Korrosionsschutzbehandlung eine nachteilige Verlängerung der Lieferzeiten einher.

Die US 3,724,643 A offenbart eine konische Transportrolle. Diese umfasst zwei separate durchgehende Rollenkörper. Ein innerer Rollenkörper ist zylindrisch ausgebildet und erstrecket sich im Wesentlichen über die gesamte Länge der Rolle. Ein äußerer Rollenkörper ist konisch ausgebildet und stützt sich über einen Stützring am zylindrischen Rollenkörper ab. Die Antriebszahnräder werden unmittelbar an dem durchgehenden zylindrischen Rollenkörper angeschweißt.

Die WO 99/054241 A1 offenbart eine Antriebsrolle für eine Rollenbahn oder einen Gurtförderer, bei welcher ein Rollenboden mit einer universellen Kupplungseinrichtung versehen ist. Modulare Antriebsräder sind korrespondierend zu der Kupplungseinrichtung ausgebildet sind und es ist eine variable Anzahl von Antriebsrädern mit der Kupplungseinrichtung durch Aufstecken in Eingriff bringbar. Solche Rollen sind für vergleichsweise leichte Lasten geeignet.

Die DE 20 2017 006 722 U1 offenbart eine Förderrolle, deren Rollenkörper eine verzinkte Außenfläche aufweist. An einer Innenfläche des Rollenkörpers wird ein Abtriebsrad mittels einer Laserschweißung befestigt.

Andere Förderrollen sind aus der JP S51 147884 A1 und der FR 1 380 687 A offenbart, wobei die FR 1 380 687 A von der Erteilungsbehörde als nächstliegender Stand der Technik angesehen wird. Insbesondere offenbart FR 1 380 687 A ein Verfahren zur Herstellung einer Förderrolle nach dem Oberbegriff des Anspruchs 1.

Es ist Aufgabe der vorliegenden Erfindung, ein verbessertes Verfahren zur Herstellung einer Förderrolle bereitzustellen. Die Erfindung wird gelöst durch ein Verfahren nach dem Hauptanspruch; Ausgestaltungen sind Gegenstand der Unteransprüche sowie der Beschreibung.

Die Adapteranordnung ermöglicht es, die grundlegenden Bauteile wie Rollenkörper und Antriebsrad miteinander zu verbinden, wobei hierbei Bauteile mit unterschiedlichen Dimensionen zum Einsatz kommen können. Die Adapteranordnung ermöglicht hierbei geringe Komplexitäten bei gleichzeitig hoher Variabilität.

Insbesondere die Verwendung des Adapterrohrs sowie eines Adapterrings kann hierbei auf einfache und kostengünstige Weise eine hohe Variabilität bereitstellen. Das Adapterrohr schafft hierbei eine hohe Variabilität bei der axialen Länge sowie bei Variationen bei der axialen Position der einzelnen Bauteile; der Adapterring schafft eine Variabilität bei den Durchmessern. Sowohl das Adapterrohr als auch der Adapterring sind insbesondere aus geometrisch einfachsten Bauteilen gebildet, die kostengünstig zu beschaffen sind.

Der Rollenkörper, die Adapteranordnung, das Adapterrohr und/oder das Antriebrad ist mit einem Korrosionsschutz versehen. Das jeweilige Bauteil weist an der Oberfläche eine Zinkschicht auf. Das jeweilige Bauteil weist diesen Korrosionsschutz vorzugsweise bereits vor dem Fügen mit dem jeweils anderen Bauteil auf. Zur Erzeugung einer Fügeverbindung wird eine Laserschweißverbindung verwendet. Die Laserschweißverbindung schafft zum einem eine sehr stabile Verbindung; zum anderen ist die Naht derart klein, dass die Wirkung eines bereits vor dem Fügen vorhandenen Korrosionsschutzes erhalten bleibt. Die Zinkschicht wird dabei nur derart geringfügig zerstört, dass der kathodische Korrosionsschutz dennoch erhalten bleibt.

Dabei ist die Zinkschicht im Bereich der Laserschweißverbindung unterbrochen. Dies wird durch den Laserschweißvorgang erzeugt. Der Laserschweißvorgang wird dabei derart ausgeführt, dass die Unterbrechung derart gering ist, so dass die Schutzwirkung dennoch auch für die freiliegenden Abschnitte der Bauteile im Bereich der Unterbrechung gegeben ist.

Das Verfahren kann dabei die Schritte umfassen: Auswählen eines Antriebsrades, insbesondere aus einer Mehrzahl an unterschiedlich ausgebildeten, insbesondere dimensionierten Antriebsrädern; Auswählen eines Rollenkörpers, insbesondere aus einer Mehrzahl an unterschiedlich ausgebildeten, insbesondere dimensionierten Rollenkörpern; Verbinden des Antriebsrades mit dem Rollenkörper anhand der Adapteranordnung. Bei den unterschiedlichen Dimensionen kann es sich insbesondere um unterschiedliche Außendurchmesser oder Innendurchmesser handeln.

Insbesondere weisen die Antriebsräder unterschiedliche Innendurchmesser auf.

Insbesondere weisen die die Rollenkörper unterschiedliche Innendurchmesser und/oder unterschiedliche Außendurchmesser auf.

Insbesondere weisen die Adapterringe der Adapteranordnungen unterschiedliche Innendurchmesser und/oder unterschiedliche Außendurchmesser auf.

Insbesondere weisen die Adapterrohe der Adapteranordnungen unterschiedliche Außendurchmesser auf.

In einer Ausgestaltung wird dabei ein axialer Abstand zwischen dem Antriebsrad und dem Rollenkörper definiert; das anschließende Anordnen des Antriebsrades an der Adapteranordnung und/oder das Anordnen der Adapteranordnung an dem Rollenkörper, und/oder Anordnen des Adapterrings an dem Adapterrohr, erfolgt in einer Position, die von dem definierten axialen Abstand abhängt.

Das verwendete Baukastensystem zum Erstellen einer Förderrolle umfasst eine Mehrzahl an unterschiedlich ausgebildeten, insbesondere dimensionierten, Rollenkörpern, eine Mehrzahl an unterschiedlich ausgebildeten, insbesondere dimensionierten, Antriebrädern, Adapteranordnungen zum selektiven Verbinden eines ausgewählten Antriebsrades ausgewählt aus der Mehrzahl an unterschiedlich ausgebildeten Antriebsrädern mit einem ausgewählten Rollenkörper ausgewählt aus der Mehrzahl an unterschiedlich ausgebildeten, insbesondere dimensionierten, Rollenkörpern. Somit kann anhand weniger Bauteile eine Vielzahl an Varianten der Förderrolle hergestellt werden.

Der Begriff zylindrische dient insbesondere zur Abgrenzung gegenüber konischen Rollen; Von einer exakt zylindrischen Form kann dabei insbesondere im Bereich der Enden des Rollenkörpers auch geringfügig abgewichen werden.

Die Erfindung wird beispielhaft anhand der Figuren nachfolgend näher erläutert. Hierin zeigt
- Figur 1: ausschnittsweise eine erfindungsgemäß hergestellte Förderrolle in einer ersten Ausgestaltung in Längsschnittdarstellung;
- Figur 2: ausschnittsweise eine erfindungsgemäß hergestellte Förderrolle in einer zweiten Ausgestaltung in Längsschnittdarstellung;
- Figur 3: ausschnittsweise eine erfindungsgemäß hergestellte Förderrolle in einer dritten Ausgestaltung in Einzelteildarstellung und Längsschnittdarstellung;
- Figur 4: Bauteile eines Baukastens zur Montage einer erfindungsgemäß hergestellten Förderrolle;
- Figur 5: eine Fördereinrichtung mit einer Mehrzahl an Förderrollen;
- Figur 6: ausschnittsweise eine erfindungsgemäß hergestellte Förderrolle in einer vierten Ausgestaltung.

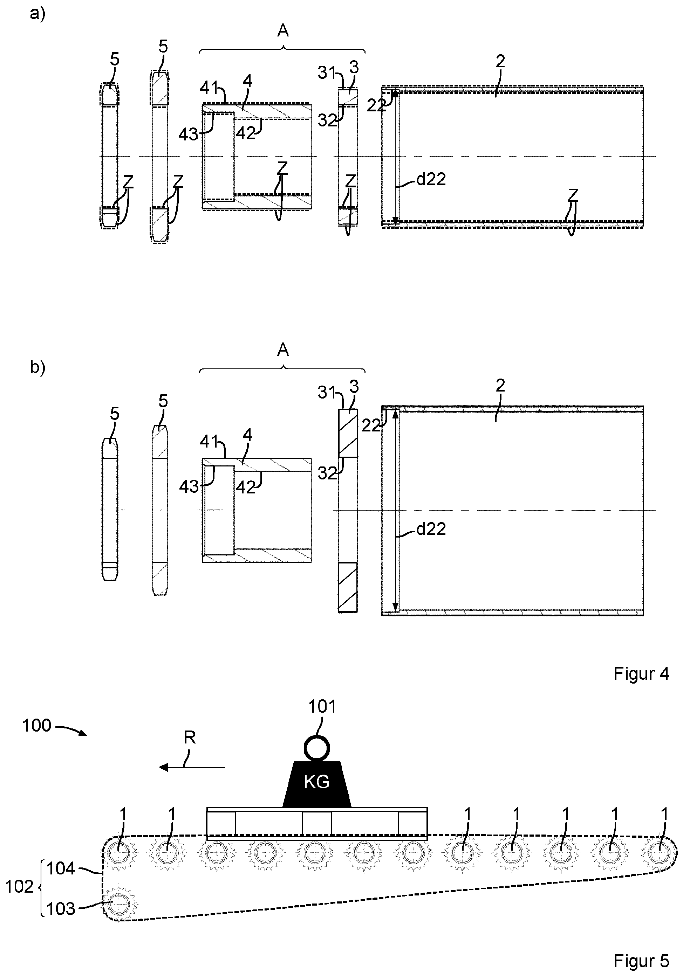

Die Figur 5 zeigt eine Fördereinrichtung 100 mit einer Mehrzahl an erfindungsgemäß hergestellten Förderrollen 1. Die Förderrollen 1 sind parallel zueinander quer zur Förderrichtung R angeordnet. Auf den Förderrollen wird ein Fördergut 101 transportiert. Das Fördergut 101 kann eine Palette oder einen Container umfassen. Ein einzelnes Fördergut 101 kann ein Gewicht von 500 kg aufweisen. Bei ungünstiger Gewichtsverteilung kann zumindest ein Großteil des Gewichts des Förderguts auf einer einzigen Förderrolle 1 abgestützt werden. Jede einzelne Förderrolle 1 ist dazu ausgelegt, dieses Gewicht zutragen.

Die Förderrollen werden durch einen Drehantrieb 102 angetrieben. Der Drehantrieb umfasst einen Motor 103 und ein Übertragungsmittel 104, insbesondere eine Antriebskette, welches eine Antriebsverbindung zwischen dem Motor 103 und den Förderrollen 1 ausbildet.

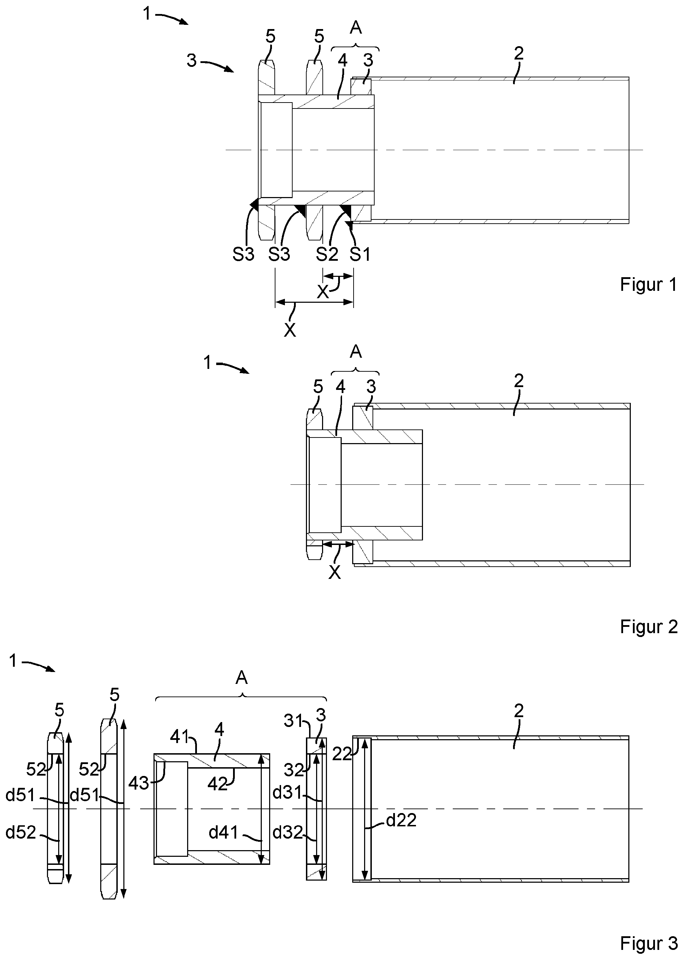

Die Figuren 1 bis 3 werden im Folgenden gemeinsam beschrieben.

Die erfindungsgemäß hergestellte Förderrolle 1 umfasst einen rohrförmigen Rollenkörper 2. An dem Rollenkörper 2 ist zumindest ein Antriebsrad 5 befestigt. Das Antriebsrad 5 ist insbesondere ein Zahnrad und dient zur Antriebsverbindung der Förderrolle mit dem Drehantrieb insbesondere anhand einer Antriebskette. Alternativ zur Ausgestaltung als Zahnrad sind auch Riemenräder denkbar.

Zur Befestigung des Antriebsrads 5 am Rollenkörper 2 ist eine Adapteranordnung A vorgesehen. Die Adapteranordnung A umfasst ein Adapterrohr 4 und einen Adapterring 3.

Das Adapterrohr 4 weist eine zylindrische Außenfläche 41 auf, an dem das Antriebsrad 5 mit einer zylindrischen Innenfläche 52 anliegt. Das Antriebsrad 5 kann an unterschiedlichen axialen Positionen am Adapterrohr angeordnet sein. Die Figuren 1 und 2 zeigen diesbezüglich, dass die Antriebsräder mit unterschiedlichem Axialabstand X gegenüber dem Rollenkörper angeordnet sein können. Es können auch mehrere Antriebsräder 5 an dem Adapterrohr angebracht sein (Figur 1). An dem Adapterrohr 4 können Antriebsräder 5 unterschiedlicher Art befestigt werden. Die unterschiedlichen Antriebsräder können dabei unterschiedliche Außendurchmesser d51 aufweisen. Ein Innendurchmesser d52 der Innenfläche 52 des Antriebsrades 5 entspricht einem Außendurchmesser d41 der Außenfläche 41 des Adapterrohrs 4.

Am Rollenkörper 2 ist ein Adapterring 3 angebracht. Der Adapterring 3 liegt mit einer zylindrischen Außenfläche 31 an einer zylindrischen Innenfläche 22 des Rollenkörpers 2 an.

An einer zylindrischen Innenfläche 32 des Adapterrings 3 liegt das Adapterrohr 4 mit einer zylindrischen Außenfläche 41 an. Hierdurch wird die radiale Ausrichtung des Adapterrings 3 zum Adapterrohr festgelegt. Ein Innendurchmesser d32 des Adapterrings 3 entspricht dem Außendurchmesser d41 des Adapterrohrs 4.

Der Adapterring 3 ist mit dem Rollenkörper 2 durch eine erste Schweißverbindung S1 axial fixiert. Das Adapterrohr 4 ist mit dem Adapterring 3 durch eine zweite Schweißverbindung S2 axial fixiert. Das Antriebsrad 5 ist mit dem Adapterrohr 4 durch eine dritte Schweißverbindung S3 axial fixiert. Die Schweißverbindungen sind jeweils umlaufend ausgebildet. Alternativ können in bestimmten Anwendungsfällen auch diskrete Punktschweißungen oder abschnittsweise ausgebildete Schweißnähte ausreichen.

Zur vereinfachten Darstellung sind die Schweißverbindungen nur in der unteren Hälfte der Figur 1 dargestellt, wobei die Schweißverbindungen zu Illustrationszwecken übertrieben groß dargestellt sind. Wenn, wie im Ausführungsbeispiel der Figur 1, zwei Antriebsräder 5 vorgesehen sind, kann jedes der Antriebsräder 5 über eine jeweilige dritte Schweißverbindung S3 mit dem Adapterrohr 4 verbunden sein.

Die zylindrischen Flächenpaarungen 41, 32 bzw. 41, 52 ermöglichen es, dass der Adapterring bzw. das Antriebsrad vor dem Anbringen der Schweißverbindung bedarfsweise in unterschiedlichen axialen Positionen am Adapterrohr 4 angeordnet werden kann.

Figur 4 zeigt Teile eines Baukastensystems. Es sind unterschiedliche Adapteranordnungen A vorgesehen, um selektiv unterschiedlich ausgebildete Rollenkörper 2 mit unterschiedlich ausgebildeten Antriebsrädern 5 zu verbinden. Die Rollenkörper 2 können sich durch einen Innendurchmesser d22 an der Innenfläche 22 voneinander unterscheiden. Die unterschiedlichen Adapterringe 3 können sich durch unterschiedliche Außendurchmesser d31 an einer Außenfläche 31 voneinander unterscheiden. An der Außenfläche 31 des Adapterrings 3 wird jeweils die Innenfläche 22 eines zu befestigenden Rollenkörpers 2 angeordnet.

Die Innendurchmesser d32 der unterschiedlichen Adapterringe 3 können identisch sein, da für alle Varianten stets ein gleichartiges Adapterrohr 4 mit jeweils identischem Außendurchmesser d41verwendbar ist. Die Adapterringe 3 dienen folglich dazu, eine einheitliche Verbindungsmöglichkeit des Adapterrohrs 4 mit unterschiedlich ausgebildeten Rollenkörpern bereitzustellen, wobei die Außenfläche 41 des Adapterrohrs 4 an der Innenfläche 32 des Adapterrings 3 angeordnet wird. Die Innendurchmesser d32 der unterschiedlich ausgebildeten Adapterringe 3 entsprechen dem Außendurchmesser d41 des Adapterrohrs 4.

Aus den Figuren 1 bis 4 ist der einfache Aufbau der Bauteile 2-5 zu erkennen. Diese Bauteile können "von der Stange" gekauft werden und sind daher günstig verfügbar. Insbesondere können die Bauteile der Adapteranordnung A aus langen Rohrteilen abgetrennt werden und stehen nach geringfügiger Bearbeitung für die Montage zur Verfügung.

Figur 4a zeigt die Bauteile 2-5 der Förderrolle 1 vor der Montage. Die Bauteile 2-5 sind mit einem Korrosionsschutz Z versehen. Bei dem Korrosionsschutz handelt es sich insbesondere um eine Korrosionsschutzschicht. Der Korrosionsschutz ist insbesondere ein kathodischer Korrosionsschutz. Insbesondere sind die Bauteile 2-5 verzinkt. Der Korrosionsschutz Z ist beispielhaft nur in der Figur 4 stellvertretend für alle weiteren Ausgestaltungen dargestellt.

Die Bauteile können insbesondere bandverzinkte Vorprodukte sein. Alternativ können die Vorprodukte mit einer anderen Art des Korrosionsschutzes versehen sein. Im Gegensatz zur bisherigen Praxis entfällt der Zwischenschritt, dass die Förderrolle nach der Montage mit dem Korrosionsschutz versehen wird.

Folglich weisen die Bauteile 2-5, die durch die Schweißverbindung miteinander verbunden werden, den Korrosionsschutz bereits auf, wenn die Schweißverbindung hergestellt wird. Hierzu wird ein Laserschweißverfahren verwendet, welches eine Schweißnahtbreite von weniger als 1mm erzeugt. Das darunter liegende Grundmaterial zweier benachbarter Bauteile geht in der Folge eine stoffschlüssige Verbindung ein. Hierbei wird lokal die Schicht, die den Korrosionsschutz ausbildet, zwar zerstört; da der Laser die zuvor vollständig geschlossene Korrosionsschutzschicht lediglich um einen Spalt von weniger als 1mm öffnet, bleibt der, insbesondere kathodische, Korrosionsschutz dennoch ausreichend erhalten.

Bei Eingang einer Bestellung können die Förderrollen nun aus vorhandenen, vorverzinkten Bauteilen zusammengesetzt werden und direkt versendet werden. Die nachgelagerte Verzinkung der montierten Bauteile, was häufig bei externen spezialisierten Betrieben erfolgt, kann entfallen, was die Lieferzeit ab Bestelleingang signifikant reduziert.

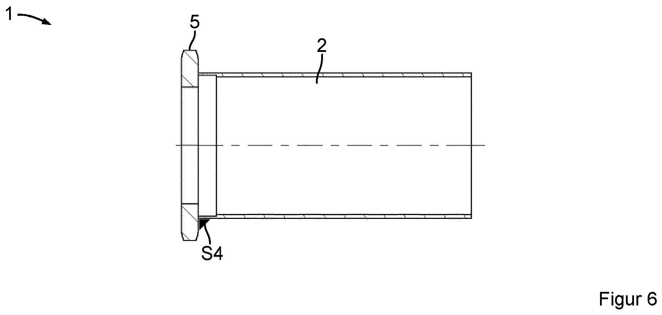

In der Ausgestaltung nach Figur 6 ist das Antriebsrad 5 über eine Laserschweißverbindung S4 direkt mit dem Rollenkörper 2 verbunden. Die Laserschweißverbindung S4 ist an einer Stirnseite des Antriebsrades 5 sowie an einer Außenumfangsfläche des Rollenkörpers 2 angebracht.

### Bezugszeichenliste

- 1: Förderrolle
- 2: Rollenkörper
- 22: Innenfläche des Rollenkörpers
- A: Adapteranordnung
- 3: Adapterring
- 31: Außenfläche des Adapterrings
- 32: Aufnahmebohrung des Adapterrings
- 4: Adapterrohr
- 41: Außenfläche des Adapterrohrs
- 42: Durchgangsbohrung
- 43: Lagersitz
- 5: Antriebsrad, insbesondere Zahnrad zur Verbindung mit Antriebskette
- 52: Innenfläche des Antriebsrades

- S1: erste Schweißnaht
- S2: zweite Schweißnaht
- S3: dritte Schweißnaht
- S4: vierte Schweißnaht
- R: Förderrichtung

- 100: Fördereinrichtung
- 101: Fördergut, insbesondere umfassend Palette oder Container
- 102: Drehantrieb
- 103: Motor
- 104: Übertragungsmittel

- d22: Innendurchmesser des Rollenkörpers
- d31: Außendurchmesser des Adapterrings
- d32: Innendurchmesser des Adapterrings
- d41: Außendurchmesser des Adapterrohres
- d52: Innendurchmesser des Antriebsrades
- d51: Außendurchmesser des Antriebsrades
- Z: Zinkschicht

## Patentansprüche

1. Verfahren zur Herstellung einer Förderrolle (1) für eine Fördereinrichtung (100), insbesondere zum Fördern von Paletten und/oder Containern,
die Förderrolle (1) umfasst:
- einen zylindrischen Rollenkörper (2),
- ein Antriebsrad (5), insbesondere zum Verbinden der Förderrolle (1) mit einem Drehantrieb (102) einer Fördereinrichtung (100),
- eine Adapteranordnung (A) zum Verbinden des Antriebsrades (5) mit dem Rollenkörper (2),
das Verfahren umfasst die folgenden Schritte:
- Bereitstellen des, insbesondere rohrförmigen, Rollenkörpers (2),
- Bereitstellen des Antriebsrads (5),
- zumindest mittelbares Verbinden des Antriebsrades (5) mit dem Rollenkörper (2) durch Anbringen einer Schweißverbindung,
**dadurch gekennzeichnet,**
- **dass** der Rollenkörper (2), die Adapteranordnung (A), ein Adapterrohr (4) der Adapteranordnung (A) und/oder
das Antriebrad (5) mit einem Korrosionsschutz (Z) versehen ist und dabei an der Oberfläche eine Zinkschicht (Z) aufweist,
- **dass** die Schweißverbindung eine Laserschweißverbindung ist, und
- **dass** die Zinkschicht im Bereich der Laserschweißverbindung durch den Laserschweißvorgang unterbrochen wird.

2. Verfahren nach dem vorherigen Anspruch, **dadurch gekennzeichnet, dass** die Adapteranordnung (A) das Adapterrohr (4) und einen separaten Adapterring (3) aufweist.

3. Verfahren nach einem der vorherigen Ansprüche,
**dadurch gekennzeichnet dass**
- das Antriebrad (5) mit der Adapteranordnung (A), insbesondere mit dem Adapterrohr (4) und/oder
- der Rollenkörper (2) mit der Adapteranordnung (A), insbesondere, in einem Verfahren nach Anspruch 2, mit dem Adapterring (3) und/oder
- in einem Verfahren nach Anspruch 2, der Adapterring (3) mit dem Adapterrohr (4), und/oder
- das Antriebrad (5) unmittelbar mit dem Rollenkörper (2) durch die Laserschweißverbindung (S1, S2, S3, S4) verbunden wird.

4. Verfahren nach dem vorherigen Anspruch,
dass die Laserschweißverbindung angeordnet wird an
- einer Stirnseite oder Außenfläche des Rollenkörpers (2) und/oder
- einer Stirnseite des Antriebrads (5) und/oder
- an einer Stirnseite und/oder Außenumfangsfläche des Adapterrohrs (4) und/oder - in einem Verfahren nach Anspruch 2, an einer Stirnseite und/oder einer Außenumfangsfläche des Adapterrings (3).

5. Verfahren nach einem der vorherigen Ansprüche,
**dadurch gekennzeichnet,**
**dass** der Korrosionsschutz (Z) im Bereich der Laserschweißverbindung (S1, S2, S3) unterbrochen ist und/oder
**dass** das Antriebrad (5), die Adapteranordnung (A), das Adapterrohr (4), der Rollenkörper (2) und/oder, in einem Verfahren nach Anspruch 2, der Adapterring (3) vor der Montage mit dem Korrosionsschutz versehen ist.

6. Verfahren nach einem der vorherigen Ansprüche ,
ferner umfassend die folgenden Schritte:
Auswählen eines Antriebsrades (5), insbesondere aus einer Mehrzahl an unterschiedlich ausgebildeten Antriebsrädern (5);
Auswählen eines Rollenkörpers (2), insbesondere aus einer Mehrzahl an unterschiedlich ausgebildeten Rollenkörpern (2);
Verbinden des Antriebsrades (5) mit dem Rollenkörper (2) anhand der Adapteranordnung (A).

7. Verfahren einem der vorherigen Ansprüche,
ferner umfassend die folgenden Schritte
Definieren eines axialen Abstandes (X) zwischen dem Antriebsrad (5) und dem Rollenkörper (2), und anschließend
- Anordnen des Antriebsrades (5) an der Adapteranordnung (A) und/oder
- Anordnen der Adapteranordnung (A) an dem Rollenkörper (2), und/oder
- In einem Verfahren nach Anspruch 2, anordnen des Adapterrings (3) an dem Adapterrohr (4) jeweils in einer Position, die von dem definierten axialen Abstand abhängt.

8. Verwendung eines Baukastensystems in einem Verfahren nach einem der vorherigen Ansprüche, umfassend,
eine Mehrzahl an unterschiedlich ausgebildeten Rollenkörpern (2),
eine Mehrzahl an unterschiedlich ausgebildeten Antriebsrädern (5), Adapteranordnungen (A) zum selektiven Verbinden eines ausgewählten Antriebsrades (5) ausgewählt aus der Mehrzahl an unterschiedlich ausgebildeten Antriebsrädern (5) mit einem ausgewählten Rollenkörper (2) ausgewählt aus der Mehrzahl an unterschiedlich ausgebildeten Rollenkörpern (2).

9. Verwendung eines Baukastensystems nach Anspruch 8 in einem Verfahren nach Anspruch 2,
**dadurch gekennzeichnet,**
**dass** die Rollenkörper (2) unterschiedliche Innendurchmesser (d22) aufweisen und die Adapterringe (3) der Adapteranordnungen unterschiedliche Außendurchmesser (d31) aufweisen, die den Innendurchmesser (d22) der Rollenkörpern (2) entsprechen.

10. Verwendung nach Anspruch 8 oder 9,
**dadurch gekennzeichnet,**
**dass** die Antriebsräder (5) unterschiedliche Außendurchmesser (d51) und identische Innendurchmesser (d52) aufweisen und die Adapterrohe (4) der Adapteranordnungen identische Außendurchmesser (d41) aufweisen, die dem Innendurchmesser (d52) der Antriebsräder (5) entsprechen und dass insbesondere, in einer Verwendung eines Baukastensystems in einem Verfahren nach Anspruch 2, die unterschiedlichen Adapterringe (3) identische Innendurchmesser (d32) aufweisen, die dem Außendurchmesser (d41) des Adapterrohrs (4) entsprechen.

## Claims

1. A method for producing a transport roller (1) for a conveying system (100), in particular for conveying pallets and/or containers,
the transport roller (1) comprises:
- a cylindrical roller body (2),
- a drive wheel (5), in particular for connecting the transport roller (1) to a rotary drive (102) of a conveying system (100),
- an adapter arrangement (A) for connecting the drive wheel (5) to the roller body (2),
the method comprises the following steps:
- providing the, in particular tubular, roller body (2),
- providing the drive wheel (5),
- at least indirectly connecting the drive wheel (5) to the roller body (2) by applying a welded joint,
**characterized**
- **in that** the roller body (2), the adapter arrangement (A), an adapter tube (4) of the adapter arrangement (A) and/or the drive wheel (5) is provided with corrosion protection (Z) and thereby has a zinc layer (Z) on the surface,
- **in that** the welded joint is a laser welded joint, and
- **in that** the zinc layer is interrupted in the region of the laser welded joint by the laser welding process.

2. The method according to the preceding claim,
**characterized**
**in that** the adapter arrangement (A) has the adapter tube (4) and a separate adapter ring (3).

3. The method according to one of the preceding claims,
**characterized**
**in that**
- the drive wheel (5) is connected to the adapter arrangement (A), in particular to the adapter tube (4), and/or
- the roller body (2) is connected to the adapter arrangement (A), in particular in a method according to Claim 2, to the adapter ring (3), and/or
- in a method according to Claim 2, the adapter ring (3) is connected to the adapter tube (4), and/or
- the drive wheel (5) is directly connected to the roller body (2) by means of the laser welded joint (S1, S2, S3, S4).

4. The method according to the preceding claim,
that the laser welded joint is arranged on
- an end face or outer surface of the roller body (2), and/or
- an end face of the drive wheel (5), and/or
- on an end face and/or outer circumference surface of the adapter tube (4), and/or
- in a method according to Claim 2, on an end face and/or an outer circumference surface of the adapter ring (3).

5. The method according to one of the preceding claims,
**characterized**
**in that** the corrosion protection (Z) is interrupted in the region of the laser welded joint (S1, S2, S3), and/or
**in that** the drive wheel (5), the adapter arrangement (A), the adapter tube (4), the roller body (2) and/or, in a method according to Claim 2, the adapter ring (3) is provided with the corrosion protection prior to assembly.

6. The method according to one of the preceding claims,
further comprising the following steps:
selecting a drive wheel (5), in particular from a plurality of differently designed drive wheels (5);
selecting a roller body (2), in particular from a plurality of differently designed roller bodies (2);
connecting the drive wheel (5) to the roller body (2) by means of the adapter arrangement (A).

7. The method according to one of the preceding claims,
further comprising the following steps
defining an axial spacing (X) between the drive wheel (5) and the roller body (2), and subsequently
- arranging the drive wheel (5) on the adapter arrangement (A), and/or
- arranging the adapter arrangement (A) on the roller body (2), and/or
- in a method according to Claim 2, arranging the adapter ring (3) on the adapter tube (4) in each case in a position which depends on the defined axial spacing.

8. The use of a modular system in a method according to one of the preceding claims, comprising
a plurality of differently designed roller bodies (2),
a plurality of differently designed drive wheels (5),
adapter arrangements (A) for selectively connecting a selected drive wheel (5) selected from the plurality of differently designed drive wheels (5) to a selected roller body (2) selected from the plurality of differently designed roller bodies (2).

9. The use of a modular system according to Claim 8 in a method according to Claim 2,
**characterized**
**in that** the roller bodies (2) have different internal diameters (d22) and the adapter rings (3) of the adapter arrangements have different external diameters (d31), which correspond to the internal diameters (d22) of the roller bodies (2).

10. The use according to Claim 8 or 9,
**characterized**
**in that** the drive wheels (5) have different external diameters (d51) and identical internal diameters (d52) and the adapter tubes (4) of the adapter arrangements have identical external diameters (d41) which correspond to the internal diameter (d52) of the drive wheels (5),
and **in that** in particular, in the use of a modular system in a method according to Claim 2, the different adapter rings (3) have identical internal diameters (d32) which correspond to the external diameter (d41) of the adapter tube (4).

## Revendications

1. Procédé de fabrication d'un rouleau de transport (1) pour un système de transport (100), en particulier pour transporter des palettes et/ou des conteneurs,
le rouleau de transport (1) comprenant :
- un corps de rouleau (2) cylindrique,
- une roue d'entraînement (5), en particulier pour relier le rouleau de transport (1) à un entraînement rotatif (102) d'un système de transport (100),
- un système d'adaptation (A) pour relier la roue d'entraînement (5) au corps de rouleau (2),
le procédé comprend les étapes suivantes :
- fourniture du corps de rouleau (2), en particulier de forme tubulaire,
- fourniture de la roue d'entraînement (5),
- liaison au moins indirecte de la roue d'entraînement (5) au corps de rouleau (2) par mise en place d'un assemblage soudé,
**caractérisé en ce que**
- le corps de rouleau (2), le système d'adaptation (A), un tube d'adaptation (4) du système d'adaptation (A), et/ou
- la roue d'entraînement (5) sont dotés d'une protection anticorrosion (Z) et comportent à cet effet une couche de zinc (Z) sur la surface,
- **en ce que** l'assemblage soudé est un assemblage soudé au laser, et
- **en ce que** la couche de zinc est interrompue dans la zone d'assemblage soudé au laser par l'opération de soudure au laser.

2. Procédé selon la revendication précédente, **caractérisé en ce que**
le système d'adaptation (A) comporte le tube d'adaptation (4) et une bague d'adaptation (3) séparée.

3. Procédé selon l'une quelconque des revendications précédentes,
**caractérisé en ce que**
- la roue d'entraînement (5) est reliée au système d'adaptation (A), en particulier au tube d'adaptation (4), et/ou
- le corps de rouleau (2) est relié au système d'adaptation (A), en particulier dans un procédé selon la revendication 2, à la bague d'adaptation (3), et/ou
- dans un procédé selon la revendication 2,
la bague d'adaptation (3) est reliée au tube d'adaptation (4), et/ou
- la roue d'entraînement (5) est directement reliée au corps de rouleau (2)
par assemblage soudé au laser (S1, S2, S3, S4).

4. Procédé selon la revendication précédente, **caractérisé en ce que**
l'assemblage soudé au laser est disposé sur
- une face avant ou surface extérieure du corps de rouleau (2), et/ou
- une face avant de la roue d'entraînement (5), et/ou
- sur une face avant et/ou une surface périphérique extérieure du tube d'adaptation (4), et/ou
- dans un procédé selon la revendication 2, sur une face avant et/ou une surface périphérique extérieure de la bague d'adaptation (3).

5. Procédé selon l'une quelconque des revendications précédentes,
**caractérisé en ce que**
la protection anticorrosion (Z) est interrompue dans la zone d'assemblage soudé au laser (S1, S2, S3), et/ou en ce que la roue d'entraînement (5), le système d'adaptation (A), le tube d'adaptation (4), le corps de rouleau (2) et/ou dans un procédé selon la revendication 2, la bague d'adaptation (3) sont dotés d'une protection anticorrosion avant le montage.

6. Procédé selon l'une quelconque des revendications précédentes,
comprenant en plus les étapes suivantes :
sélection d'une roue d'entraînement (5), en particulier à partir d'une pluralité de roues d'entraînement (5) constituées de façon différente,
sélection d'un corps de rouleau (2), en particulier à partir d'une pluralité de corps de rouleau (2) constitués de façon différente,
liaison de la roue d'entraînement (5) au corps de rouleau (2) à l'aide du système d'adaptation (A).

7. Procédé selon l'une quelconque des revendications précédentes,
comprenant en plus les étapes suivantes définition d'une distance axiale (X) entre la roue d'entraînement (5) et le corps de rouleau (2), et ensuite
- mise en place de la roue d'entraînement (5) sur le système d'adaptation (A), et/ou
- mise en place du système d'adaptation (A) sur le corps de rouleau (2), et/ou
- dans un procédé selon la revendication 2, mise en place de la bague d'adaptation (3) sur le tube d'adaptation (4), à chaque fois dans une position, qui dépend de la distance axiale définie.

8. Utilisation d'un système modulaire dans un procédé selon l'une quelconque des revendications précédentes, comprenant :
une pluralité de corps de rouleau (2) constitués de façon différente,
une pluralité de roues d'entraînement (5) constituées de façon différente,
des systèmes d'adaptation (A) pour la liaison sélective d'une roue d'entraînement (5) sélectionnée à partir de la pluralité de roues d'entraînement (5) constituées de façon différente avec un corps de rouleau (2) sélectionné choisi à partir de la pluralité de corps de rouleau (2) constitués de façon différente.

9. Utilisation d'un système modulaire selon la revendication 8 dans un procédé selon la revendication 2,
**caractérisé en ce que**
les corps de rouleau (2) comportent des diamètres intérieurs différents (d22) et les bagues d'adaptation (3) des systèmes d'adaptation comportent des diamètres extérieurs différents (d31), qui correspondent au diamètre intérieur (d22) des corps de rouleau (2).

10. Utilisation selon la revendication 8 ou 9,
**caractérisée en ce que**
les roues d'entraînement (5) comportent des diamètres extérieurs différents (d51) et des diamètres intérieurs identiques (d52) et les tubes d'adaptation (4) des systèmes d'adaptation comportent des diamètres extérieurs identiques (d41), qui correspondent au diamètre intérieur (d52) des roues d'entraînement (5) et **en ce qu'**en particulier dans une utilisation d'un système modulaire dans un procédé selon la revendication 2, les bagues d'adaptation différentes (3) comportent des diamètres intérieurs identiques (d32), qui correspondent au diamètre extérieur (d41) du tube d'adaptation (4).
